# EUROPÄISCHE PATENTANMELDUNG

(11) **EP 4 235 840 A1**
(43) Veröffentlichungstag der Anmeldung: **30.08.2023**
(21) Anmeldenummer: 22158298.4
(22) Anmeldetag: 23.02.2022
(51) Int. Cl.: H01M 4/06, H01M 4/24, H01M 4/38, H01M 4/50, H01M 4/62, H01M 4/90, H01M 6/04, H01M 6/14, H01M 12/06

(54) **METALL-ENTHALTENDES ANODENMATERIAL SOWIE ELEKTROCHEMISCHE PRIMÄRZELLEN ENTHALTEND DAS ANODENMATERIAL UND VERWENDUNG DER VERBINDUNGEN**

(71) Anmelder: Evonik Operations GmbH, 45128 Essen (DE); Forschungszentrum Jülich GmbH, 52425 Jülich (DE)
(72) Erfinder: Die Erfindernennung liegt noch nicht vor
(74) Vertreter: Evonik Patent Association

(57) **Zusammenfassung**

Gegenstand der Erfindung ist ein Metall-enthaltendes Anodenmaterial, insbesondere zur Verwendung in elektrochemischen Primärzellen mit alkalischem Elektrolyten, wobei das Metallenthaltende Anodenmaterial als Metall umfasst Silizium, Zink, Aluminium, Eisen und/oder Legierung umfassend eines oder mehrere der vorgenannten Metalle, und die Oberfläche des Metallenthaltenden Anodenmaterials zumindest teilweise organofunktionelle Silizium-enthaltenden Verbindungen aufweist. Als Silizium-enthaltende Verbindungen gelten organofunktionelle Silane und organofunktionelle Siloxanoligomere mit denen die Oberflächen versehen oder ausrüstbar sind.

## Beschreibung

Gegenstand der Erfindung ist ein Metall-enthaltendes Anodenmaterial, insbesondere zur Verwendung in elektrochemischen Primärzellen mit alkalischem Elektrolyten, wobei das Metall-enthaltende Anodenmaterial als Metall umfasst Silizium, Kalium, Zink, Aluminium, Eisen und/oder Legierung umfassend eines oder mehrere der vorgenannten Metalle, und die Oberfläche des Metall-enthaltenden Anodenmaterials zumindest teilweise organofunktionelle Silizium-enthaltende Verbindungen aufweist. Als Silizium-enthaltende Verbindungen gelten organofunktionelle Silane und organofunktionelle Siloxanoligomere mit denen die Oberflächen versehen oder ausrüstbar sind.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung, besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium-enthaltende Lithium-Ionen-Sekundärbatterien täglich weltweit im Einsatz.

Aufgabe der Erfindung war es ein Anodenmaterial und/oder ein Additiv für elektrochemische Primärzellen oder Elektrolyten bereitzustellen, das geeignet ist die Oberfläche des Anodenmaterials gegenüber korrosiven Einflüssen zumindest für eine gewisse Zeit zu stabilisieren bis hin zur Inhibierung der Korrosion. Somit bestand eine Aufgabe darin, eine Passivierung der Anodenoberfläche durch eine aktive und/oder passive Inhibierung bereitzustellen.

Überraschenderweise wurde gefunden, dass eine Modifizierung der Oberfläche von Metallenthaltendem Anodenmaterial mit organofunktionellen Silizium-enthaltenden Verbindungen die Korrosion inhibiert. Eine solche Inhibierung kann einerseits mittels einer aktiven Passivierung der Anodenoberfläche und/oder eine passive Passiervierung der Anodenoberfläche erfolgen.

Die Aufgaben wurden gelöst durch ein Metall-enthaltendes Anodenmaterial dessen Oberfläche zumindest teilweise organofunktionelle Silizium-enthaltende Verbindungen aufweist, die insbesondere kovalent oder zumindest zeitweise kovalent an die Oberfläche der Anode gebunden sind und/oder über ionische Wechselwirkungen diese solvatisieren. Zusätzlich oder alternativ können vorzugsweise die organofunktionellen Silizium-enthaltenden Verbindungen über polare Wechselwirkungen mit der Oberfläche des Anodenmaterials und der Anodenoberfläche wechselwirken und diese vorzugsweise gegenüber einer Korrosion passivieren. Insoweit werden die Aufgaben ebenfalls gelöst durch die Verwendung von organofunktionellen Silizium-enthaltenden Verbindungen, vorzugsweise von Silanen, Silanolen und/oder Siloxanoligomeren und Gemischen dieser, als Additiv in Elektrolytlösungen, insbesondere in Elektrolytlösungen die für elektrochemische Primärzellen geeignet sind. Besonders geeignet sind organofunktionelle Silane, organofunktionelle Silanole und/oder organofunktionelle Siloxanoligomere als Additive in Elektrolytlösungen

Die Aufgaben wurden auch gelöst durch ein Metall-enthaltendes Anodenmaterial nach Anspruch 1, die Verwendung der Additive nach Anspruch 14, sowie die Primärzelle nach Anspruch 11, bevorzugte Ausführungsformen werden in den Unteransprüchen und detailliert in der Beschreibung offenbart.

Gegenstand der Erfindung ist ein Metall-enthaltendes Anodenmaterial, insbesondere zur Verwendung in elektrochemischen Primärzellen mit alkalischem Elektrolyten, wobei das Metall-enthaltende Anodenmaterial als Metall umfasst Silizium, Kalium, Zink, Aluminium, Eisen und/oder als Metall Legierung umfasst, die ein oder mehrere der vorgenannten Metalle enthält, und die Oberfläche des Metall-enthaltenden Anodenmaterials zumindest teilweise organofunktionelle Silizium-enthaltende Verbindungen aufweist.

Ferner ist Gegenstand der Erfindung ein Anodenmaterial das als Metall (im Folgenden abgekürzt: Me) umfasst Silizium (Si), Kalium (K), Zink (Zn), Aluminium (Al), Eisen (Fe) und/oder Legierung umfassend eines oder mehrere der vorgenannten Metalle und optional Lithium (Li), insbesondere umfassend eine Legierung Silizium, Kalium, Zink, Aluminium und/oder Eisen und jeweils optional Lithium.

In einer besonders bevorzugten Alternative weist die Oberfläche des Anodenmaterials Metall-Sauerstoff-Silizium-Strukturen auf, die nachfolgend auch als Me-O-Si-Struktur bezeichnet werden, wobei die Silizium-Struktur, hier Si-Struktur, Bestandteil einer organofunktionellen Silizium-enthaltenden Verbindung sein kann oder ist. Als Bestandteil einer organofunktionellen Silizium-enthaltenden Verbindung gilt insbesondere eine Verbindung, die aus einem organofunktionellen Silan durch Hydrolyse und/oder Kondensation abgeleitet werden kann und ggf. über Sauerstoff kovalent an Oberflächen des Anodenmaterials oder an ein Festphasengel auf einer Oberfläche eines Anodenmaterials gebunden ist.

Entsprechend einer bevorzugten Ausführungsform weist die Oberfläche des Anodenmaterials, insbesondere einer daraus hergestellten Anode, zumindest teilweise bis zur vollständigen Bedeckung der Oberfläche, Metall-Sauerstoff-Silizium-Strukturen auf, wie Me-O-Si-Strukturen, wobei die Silizium-Strukturen jeweils unabhängig Bestandteile organofunktioneller Siliziumenthaltender Verbindungen sind. Nach einer weiteren Alternative kann die Oberfläche dynamisch mit organofunktionellen Silizium-enthaltenden Verbindungen zumindest teilweise solvatisiert sein.

Nach einer weiteren alternativen Ausführungsform ist Gegenstand der Erfindung ein Anodenmaterial dessen Oberfläche zumindest teilweise ein Festphasengel aufweist, wobei das Gel umfasst Metall-Sauerstoff-Strukturen, insbesondere umfasst das Gel Wasser und Hydroxy-funktionelle Strukturen von Siloxanen, insbesondere Siloxanoligomeren, Zinkhydroxid, Aluminiumhydroxid und/oder Eisenhydroxid-Strukturen, wobei die Metall-Sauerstoff-Strukturen mindestens teilweise als Metall-Sauerstoff-Silizium-Strukturen, bspw. Me-O-Si-Struktur, ausgebildet sind, wobei die Silizium-Strukturen, wie Si-Strukturen, in der jeweiligen Struktur Bestandteil einer organofunktionellen Silizium-enthaltenden Verbindung sind oder aus einer organofunktionellen Silizium-enthaltenden Verbindung abgeleitet sind. Silizium ist ein Halbmetall und gilt erfindungsgemäß daher auch als Metall.

Nach einer besonders bevorzugten Alternative weist die Oberfläche des Anodenmaterials, insbesondere die Oberfläche einer aus dem Anodenmaterial hergestellten Anode, zumindest teilweise bis vollständig Metall-Sauerstoff-Silizium-Strukturen an der Oberfläche auf, die umfassen mindestens eine Struktur der Formeln I, insbesondere der Formel Ia und/oder ein Festphasengel, insbesondere mit Strukturen der Formel Ib, jeweils mit Me gleich Metall umfassend Silizium, Kalium, Zink, Aluminium, Eisen und/oder als Metall Legierung, die ein oder mehrere der vorgenannten Metalle und optional Lithium umfassen kann. Mit Metall-Sauerstoff-Silizium-Strukturen der Formel I

Me-O-R (I)

dargestellt in der nachfolgenden Formel Ia mit (O_{m/2})Me-O-R (Ib) oder (HOₘ)Me-O-R (Ib) oder entsprechende O- und HO-funktionelle Me-OR als Festphasengel enthaltend Metalle, mit m = 1 bis 3 und R jeweils unabhängig in I, Ia und/oder Ib ausgewählt aus organofunktionellen Silizium-enthaltenden Verbindungen. In der nachfolgenden Formel Ia stellt Me Metallatome in der Oberfläche des Anodenmaterials dar und Me in der Formel Ib stellt ein Metallatom dar, das an Sauerstoffatome gebunden oder von diesen umgeben ist, n als Index kann größer 1 sein. In einer besonders bevorzugten Ausführungsform ist in Formel Ib ein Siloxanoligomer mit Me gleich Silizium darstellt, wobei R eine organofunktionelle Silizium-Verbindung oder ein Bestandteil einer organofunktionellen Silizium-Verbindung ist, wie vorzugsweise der Formeln IIa, IIa*, IIa**, IIa***, IIb und/oder Hydrolysate und/oder Kondensate dieser.

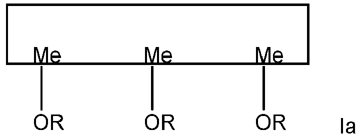

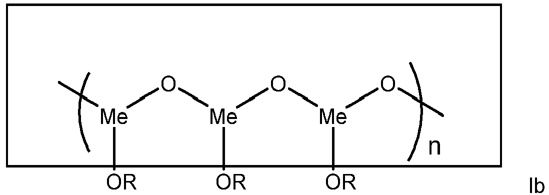

In den vorstehend dargestellten Formeln Ia und Ib sind die Oberflächen im Metall-enthaltenden Anodenmaterial, insbesondere des Anodenmaterials in Form einer Anode, mit organofunktionellen Silizium-enthaltenden Verbindungen als R dargestellt. In Formel Ia sind einzelne Metallatome in einer Oberfläche dargestellt, die über Sauerstoffatome mit den organofunktionellen Silizium-Verbindungen verbunden sind und als -OR dargestellt sind. In Formel Ib ist ein Festphasengel angedeutet, das beispielsweise ein Siloxanoligomer im Bereich der Oberfläche des Anodenmaterials, insbesondere in Form einer Anode, darstellt, welches über Sauerstoffatome mit organofunktionellen Silizium-Verbindungen, dargestellt als -OR, verbunden ist. Sowohl -OR in Formel Ia als auch in Formel Ib können die Oberfläche des Metall-enthaltenden Anodenmaterials passivieren und somit die Korrosion hinauszögern.

In einer besonders bevorzugten Ausführungsform umfassen die Silizium-enthaltenden Verbindungen des Anodenmaterials oder in einer Elektrolytlösung Verbindungen der allgemeinen Formeln IIa, IIa*, IIa**, IIa*** und/oder IIb sowie optional Gemische enthaltend diese Verbindungen oder Silanole, Siloxanole, Siloxane davon. In ebenfalls bevorzugten Ausführungsformen weist das Anodenmaterial an seiner Oberfläche zumindest teilweise bis vollständig organofunktionelle Silizium-enthaltende Verbindungen auf, die Verbindungen der allgemeinen Formel II - SiZₓ mit Z umfassend O, C, N und optional H, mit x = 1,5 bis 3, bevorzugt umfasst Forme II die Formeln IIa, IIa*, IIa**, IIa*** und/oder IIb, wobei IIb umfasst Siloxanoligomere, wie Organosiloxane mit kettenförmigen, cyclischen, vernetzten und/oder raumvernetzten Strukturen und/oder Formel II umfasst mindestens ein Silan-Strukturelement der Formel IIa, IIa*, IIa** und/oder IIa***, oder mit R in Formel I umfassend Formel IIa, IIa*, IIa**, IIa*** und/oder IIb oder Gemischen davon

-SiY(OR¹)_{c}(OR²)_{d} (IIa)

-SiY(O⁻)_{c}(OR²)_{d} (IIa*)

mit c gleich 1 oder 2 und d gleich 1 oder 2, wobei c + d = 2 in Formel IIa und IIa*, und R¹ ausgewählt aus Methyl, Ethyl, n-Propyl, iso-Propyl, Polyether, und R² gleich Wasserstoff ist, wobei Y umfasst 3-Gylcidyloxypropyl-, 3-Glycidyloxyethyl-, 3-Glycidyloxymethyl-, 3-(2,3-dihydroxyprop-1-oxy)propyl- 3-(2,3-dihydroxyprop-1-oxy)ethyl-, 3-(2,3-dihydroxyprop-1-oxy)methyl-, -Polyalkylenoxid-Gruppen, und/oder Alkyl-Gruppen mit C1 bis C16,

-SiY(OR¹)_{c}(OR²)_{d}(O_{1/2}) (IIb)

in Siloxanoligomeren der Formel IIb mit c gleich 0 oder 1 und d gleich 0 oder 1, wobei c + d = 1, und R¹ ausgewählt aus Methyl, Ethyl, n-Propyl, iso-Propyl, Polyether, und R² gleich Wasserstoff ist, wobei Y umfasst 3-Gylcidyloxypropyl-, 3-Glycidyloxyethyl-, 3-Glycidyloxymethyl-, 3-(2,3-dihydroxyprop-1-oxy)propyl-, 3-(2,3-dihydroxyprop-1-oxy)ethyl- oder 3-(2,3-dihydroxyprop-1-oxy)methyl- oder -Polyalkylenoxid-Gruppen.

In einer Alternative kann die Formel II als IIa** oder IIa*** oder Formel I mit R vorliegen

-SiY₂(OR¹)_{c}(OR²)_{d} (IIa**)

-SiY₂(O⁻)_{c}(OR²)_{d} (IIa***)

mit in Formel IIa** und IIa*** R¹ ausgewählt aus Methyl, Ethyl, n-Propyl, iso-Propyl, Polyether, mit c gleich 0 oder 1 und d gleich 0 oder 1, wobei c + d = 1, und R² gleich Wasserstoff ist, wobei Y umfasst 3-Gylcidyloxypropyl-, 3-Glycidyloxyethyl-, 3-Glycidyloxymethyl-, 3-(2,3-dihydroxyprop-1-oxy)propyl-3-(2,3-dihydroxyprop-1-oxy)ethyl-, 3-(2,3-dihydroxyprop-1-oxy)methyl-, -Polyalkylenoxid-Gruppen und/oder lineare und/oder verzweigte Alkyl-Gruppen mit ein bis sechszehn C-Atomen, insbesondere ausgewählt aus Mehtyl, Ethyl, Propyl, Butyl, n-Butyl, iso-Butyl, tert-Butyl, Isomere von Pentyl, Isomere von Hexyl, Isomere von Heptyl, Isomere von Octyl. Alle vorgenannten Silizium-enthaltende Verbindungen können in beliebigen Gemischen vorliegen.

In einer weiteren bevorzugten Alternative ist Y in Formeln IIa, IIa*, IIa**, IIa*** oder IIb eine
- Polyalkylenoxid-Gruppe, die umfasst -Alkylen-(O-Alkylen)ₑ-OH,
- Alkylen-(O-Alkylen)ₑ-COOH, -Alkylen-(O-Alkylen)ₑ-(C=O)NHR³,
- Alkylen-(O-Alkylen)ₑ-(C=O)NR³₂, mit R³ gleich Kohlenwasserstoff oder Polyalkylenoxid,
- Alkylen-(O-Alkylen)ₑ-O-Alkyl, -Alkylen-(O-Alkylen)ₑ-O-Alkenyl,
- Alkylen-(O-Alkylen)ₑ-O-(C=O)-Alkyl, -Alkylen-(O-Alkylen)ₑ-O-(C=O)-Alkenyl,
- Alkylen-(O-Alkylen)ₑ-O-(C=O)-Aromat-Alkyl jeweils unabhängig mit e größer gleich 2, insbesondere mit e = 5 bis 100, insbesondere
e = 5 bis 50, bevorzugt e = 5 bis 25, wobei Alkylen jeweils unabhängig ausgewählt ist aus Methylen, Ethylen, Propylen und Butylen.

Ebenfalls Gegenstand der Erfindung ist ein Metall-enthaltendes Anodenmaterial in dem das Metall umfasst Silizium und optional Lithium und/oder Legierung umfassend mindestens Silizium. Dabei liegt das Anodenmaterial vorzugsweise als dreidimensionaler Formkörper mit äußerer Oberfläche und innerer Oberfläche vor, wobei insbesondere der Formkörper Siliziumpartikel umfasst, und wobei der Formkörper auf mindestens einem Teil seiner äußeren und inneren Oberfläche organofunktionelle Silizium-enthaltende Verbindungen aufweist.

Silizium-enthaltende Verbindungen sind vorzugsweise ausgewählt aus organofunktionellen Silanen oder aus organofunktionellen Silan(en) abgeleitete Siloxane, Mischung von organofunktionellen Silanen, Mischung von organofunktionellen Silanen und funktionellen Siloxanen und/oder einer Mischung von organofunktionellen Siloxanoligomere, mit denen das Anodenmaterial vorzugsweise versehen, ausgerüstet oder ausrüstbar ist. Bevorzugt weist die äußere und/oder innere Oberfläche von 5 bis 100 %, bevorzugt von 10 bis 50 % der Oberfläche die Silizium-enthaltende Verbindung auf. Die Oberfläche kann mit den, dem Fachmann bekannten Methoden wie bspw. mittels BET-Bestimmung erfolgen.

Ferner ist Gegenstand der Erfindung ein Anodenmaterial, das Siliziumpartikel und optional Kohlenstoff und Silizium-enthaltende Partikel und optional Partikel mindestens einer allotropen Kohlenstoffmodifikation umfasst, wobei die Siliziumpartikel jeweils unabhängig voneinander einen Gehalt an Eisen, Zink, Aluminium, Kohlenstoff, Calcium, Kalium, optional Titan, optional Sauerstoff, optional Kupfer von jeweils größer gleich 0,01 mg/kg aufweisen.

Das Anodenmaterial liegt vorzugsweise als dreidimensionaler Formkörper in Form einer im Wesentlichen ebenen Platte vor. Dabei weist die Platte eine Vorderseite und eine der Vorderseite gegenüberliegende Rückseite auf, wobei Vorder- und Rückseite mit zwischen Vorder- und Rückseite umlaufender Seitenfläche die Platte ausbilden. Vorzugsweise bilden Vorder-, Rück- und Seitenflächen die Oberfläche der Anode, und insbesondere die Oberfläche des Metall-enthaltenden Anodenmaterials, das zumindest teilweise organofunktionelle Silizium-enthaltende Verbindungen aufweist. Die Platte kann aus Partikel von Metall-enthaltenden partikelförmigen Pulvern gebildet sein, die insbesondere ein Gefüge bilden. Das Gefüge der Partikel in einem Formkörper kann beispielsweise aber nicht ausschließlich durch Sintern von Pulvern, Formkörpern, Grün- oder Weißlingen erhalten werden. In dem Gefüge sind die Partikel vorzugsweise stoffschlüssig miteinander verbunden.

So kann beispielsweise eine stoffschlüssige Verbindung der Siliziumpartikel untereinander mittels des Siliziums der Siliziumpartikel durch ein An- und/oder vollständiges Aufschmelzen der Partikel erfolgen. Dabei ist es bevorzugt, wenn a) die stoffschlüssig miteinander verbundenen Siliziumpartikel miteinander i) verschmolzen und/oder ii) versintert und/oder iii) verpresst sind, oder b) der stoffschlüssige Verbund an den Kontaktpunkten der Siliziumpartikel durch Silizium-Material der Siliziumpartikel gebildet wird, indem die Silizium-Partikel miteinander i) verschmolzen und/oder ii) versintert und/oder iii) verpresst sind.

Partikel von Metall-enthaltenden partikelförmigen Pulvern umfassen, vorzugsweise Partikelgröße von 1 nm bis 30 000 nm, bevorzugt sind Gemische von Fraktionen von Partikelgrößen umfassend Partikelgrößen von 10 nm bis 1000 nm und 1000 nm bis 30 000 nm.

Gleichfalls Gegenstand der Erfindung ist eine elektrochemische Primärzelle mit Anode umfassend ein erfindungsgemäßes Anodenmaterial, wobei die Primärzelle ferner umfasst Kathode und Separator, wobei der Separator Anode und Kathode separiert, wobei die Primärzelle eine Elektrolytlösung enthält, und wobei die Kathode eine Zusammensetzung umfasst, die Kohlenstoffmaterial und ein sauerstoffspeicherndes Material umfasst, das Sauerstoff als eine sauerstoffhaltige Verbindung speichert. Die Kathode kann nach einer bevorzugten Alternative eine Luftkathode sein. Besonders bevorzugt ist die elektrochemische Primärzelle eine elektrochemische Silizium-Kathoden-Primärzelle oder eine Silizium-Luftkathode-Primärzelle, die ganz besonders bevorzugt als Silizium-Knopfzelle bspw. Hörgeräte Batterie, oder als Silizium-Batterie-Stapel vorliegt. Typischerweise liegen Silizium-Batterie-Stapel in mehrzelligen Fahrzeugbatterien vor.

Vorzugsweise umfasst die Zusammensetzung der Kathode als sauerspeicherndes Material a) mindestens ein Manganoxid, insbesondere Mangandioxid, als Bestandteil des Kathodenmaterials, wobei insbesondere das Kathodenmaterial als Kathode in einem hermetisch abgeschlossenen Batteriegehäuse vorliegt, oder b) die Kathode eine Luftkathode ist und die Zusammensetzung der Kathode als Bestandteil des Kathodenmaterials ein Manganoxid, insbesondere Manganoxid und/oder Mangandioxid, Platin, Platin-Basis, Silber einzeln oder gemeinsam als Katalysator umfasst.

Bevorzugte Primärzellen umfassen eine Elektrolytlösung einer wässrigen, alkalischen Elektrolytzusammensetzung, die umfasst oder ausgewählt ist aus
i) mindestens eine lineare oder verzweigte Polyalkylenoxid-Gruppen aufweisende Silizium-Verbindung mit mindestens zwei Alkylenoxid-Gruppen in der Verbindung oder Gemische von mindestens zwei dieser Verbindungen, wobei die Alkylenoxid-Gruppen ausgewählt sind aus Methylenoxid, Ethylenoxid, Propylenoxid und Butylenoxid-Gruppen und/oder
ii) 3-Glycidyloxypropylalkoxysilan, 3-Glycidyloxyethylalkoxysilan, 3-Glycidyloxymethylalkoxysilan, 3-(2,3-dihydroxyprop-1-oxy)propylalkoxysilan, 3-(2,3-dihydroxyprop-1-oxy)ethylalkoxysilan, 3-(2,3-dihydroxyprop-1-oxy)methylalkoxysilan, mit jeweils unabhängig Alkoxy ausgewählt aus Methoxy, Ethoxy und Propropoxy, Hydrolysate der vorgenannten Silane und/oder oligomere Kondensate der vorgenannten Silane, und/oder
iii) Cyclopentylmethylether, 1,3-Dioxolan, Ethylencarbonat, 4-Hydroxymethyl-2,2-dimethyl-1,3-dioxolan, 4-Hydroxymethyl-1,3-dioxolan und/oder 4-Hydroxymethyl-1,3-dioxolan-2-on, oder Gemische mindestens zweier der Verbindungen ausgewählt aus i), ii) und iii) umfasst. Unter einem Hydroylsat der Silane sind Silanole mit und ohne Alkoxy-Gruppen zu verstehen. Als oligomere Kondensate werden Siloxanole, wie Siloxanoligomere verstanden, die ebenfalls Alkoxy-Gruppen aufweisen können oder ggf. vorllständig hydrolysiert vorliegen können. Beispiele dieser Verbindungen umfassen [3-(2,3-dihydroxyprop-1-oxy)propyl]- silanololigomere oder [3-Glycidyloxyprop1-oxypropyl]silanololigomere. Ferner können 1,3-Dioxolan-Derivate eingesetzt werden. Somit ist auch Gegenstand der Erfindung eine Elektrolytlösung einer wässrigen, alkalischen Elektrolytzusammensetzung, die die vorstehend genannten Komponenten i), ii) und/oder iii) alleine oder in Mischungen umfasst.

Gleichfalls Gegenstand der Erfindung ist die Verwendung von Silanen, Silanolen und/oder Siloxanoligomeren, insbesondere deren Verwendung als Additive in Elektrolylösungen, wobei diese umfassen 3-Glycidyloxypropylalkoxysilan, 3-Glycidyloxyethylalkoxysilan, 3-Glycidyloxymethylalkoxysilan, 3-(2,3-dihydroxyprop-1-oxy)propylalkoxysilan, 3-(2,3-dihydroxyprop-1-oxy)ethylalkoxysilan, 3-(2,3-dihydroxyprop-1-oxy)methylalkoxysilan, mit jeweils unabhängig Alkoxy ausgewählt aus Methoxy, Ethoxy und Propropoxy, Hydrolysate der vorgenannten Silane und/oder oligomere Kondensate der vorgenannten Silane, oder Gemische von zwei der vorgenannten Verbindungen als Elektrolytbestandteil und/oder zur Herstellung von Metallenthaltendem Anodenmaterial, das an seiner Oberfläche zumindest teilweise organofunktionelle Silizium-enthaltende Verbindungen aufweist, die abgeleitet sind aus den vorgenannten Silanen, Silanolen und/oder Siloxanoligomeren und optional eine Verwendung von Cyclopentylmethylether, 1,3-Dioxolan, Ethylencarbonat, 4-Hydroxymethyl-2,2-dimethyl-1,3-dioxolan, 4-Hydroxymethyl-1,3-dioxolan und/oder 4-Hydroxymethyl-1,3-dioxolan-2-on oder Gemische mindestens zweier der vorgenannten Verbindungen in einer Elektrolytlösung, insbesondere in einer Zusammensetzung als Korrosionsschutzmittel, Regler in einer Elektrolytlösung und/oder auf Anoden, als Passivierungsmittel in einer Elektrolytlösung und/oder auf Anoden und/oder Stabilisator in einer Elektrolytlösung und/oder auf Anoden, bevorzugt in einer Elektrolytlösung mit einem pH-Wert größer 9, besonders bevorzugt größer 10, besonders bevorzugt größer pH-Wert 12. Als auf Anoden werden vorzugsweise kovalent und/oder ionische Modifizierungen der Oberfläche der Anode verstanden, die insbesondere die Korrosionsgeschwindigkeit beeinflussen und diese vermindern und/oder die Potentialdifferenz zwischen Anode und Kathode erhöht.

Nach einer bevorzugten Ausführungsform weist das Anodenmaterial, insbesondere in Form einer Silizium-Anode einen Formkörper auf, der eine Dichte von 0,1 g/cm³ bis 2,3 g/cm³ aufweist. Weiter bevorzugt weist der Formkörper eine Dichte von 0,5 g/cm³ bis 2,1 g/cm³auf, bevorzugt von 0,5 bis 1,8 g/cm³, weiter bevorzugt von 1,3 bis 1,8 g/cm³.

Bevorzugte organofunktionelle Silizium-Verbindungen umfassen Alkyltrialkoxysilane, Dialkyldialkoxysilane, (Polyalkylenoxid)alkylsilane, Glycidyl-alkyltrialkoxysilane, Glycidylalkyl(alkyl)dialkoxysilane, sowie deren Hydrolyse- und optional Kondensationsprodukte Alkylsiloxane, Dialkylsiloxane, (Polyalkylenoxid)alkylsiloxane, Glycidylalkylsiloxane, Glycidylalkyl(alkyl)siloxane. Die jeweiligen Alkyl-Gruppen können linear, verzweigt und/oder cyclisch sein und können umfassen 1 bis 24 C-Atome, bevorzugt 1 bis 10 C-Atome, besonders bevorzugt 1 bis 8 C-Atome. Besonders bevorzugt sind Methyl, Ethyl, Propyl, Butyl, Pentyl, Hexy, Heptyl, Octyl und die jeweiligen, dem Fachmann bekannten Isomere. Die Alkoxy-Gruppen sind vorzugsweise ausgewählt aus Methoxy, Ethoxy, Propoxy und Butoxy. Des Weiteren sind alle Hydroxy-funktionellen Silane der vorgenannten Silane umfasst, die durch Hydrolyse der jeweiligen Alkoxysilane erhältlich sind.

Die Silane und/oder Siloxane können vorzugsweise mittels einer oder zwei Si-O-Bindungen im alkalischen Elektrolyten an der Me-O-, insbesondere Si-O-funktionalisierten Oberflächen als Me-O-Si-Verbindung kovalent gebunden sein. Vorzugsweise weisen die Silane und/oder Siloxane zwei Alkyl-Gruppen auf. Dabei kann es bevorzugt sein, wenn die Silane mit Gruppen funktionalisiert sind die entweder eine deutliche sterische Behinderung der Hydroxidionen bewirken, so dass diese nicht ungehindert an die Oberfläche der Silizium-Anode vordringen können oder die funktionellen Gruppen umfassen (Polyalkylenoxid)alkyl-Gruppen, die flexibel die Oberfläche der Silizium-Anode belegen können und so die Korrosion für eine gewisse Zeit inhibieren können.

Gleichfalls ist es bevorzugt, wenn zusätzlich oder alternativ die Elektrolytlösung eine wässrige, alkalische Zusammensetzung ist, die umfasst Polyalkylenoxid, oder ein Gemisch von Polyalkylenoxiden. Dabei ist es bevorzugt, wenn die Alkylene ausgewählt sind aus bivalenten Alkylenen, die 1 bis 6 C-Atome umfassen, und die bivalenten Alkylene vorzugsweise ausgewählt sind aus Methylen, Ethylen, n-Propylen, iso-Propylen und Butylen. Weiter ist es bevorzugt, wenn das Polyalkylenoxid ausgewählt ist aus HO(C₂H₄O)ₙH mit n größer gleich 4, R¹O(C₂H₄O)ₙ₁R² mit R¹ und R² jeweils unabhängig ausgewählt aus -H, -Alkyl, -C=O-Alkyl mit Alkyl jeweils unabhängig mit 1 bis 6 C-Atomen, wobei R¹ oder R nicht gleich H sind, mit n1 = größer gleich 4, HO(C₃H₆O)ₘH mit m größer gleich 4, R³O(C₃H₆O)ₘ₁R⁴ mit R³ und R⁴ jeweils unabhängig ausgewählt aus H, Alkyl, -C=O-Alkyl, mit Alkyl jeweils unabhängig mit 1 bis 6 C-Atomen, mit m1 größer gleich 4, wobei R³ oder R⁴ nicht gleich H sind, Polyether der vorgenannten Polyalkylenoxide umfassend Ethylenoxid und Propylenoxid-Einheiten und Gemischen von Polyalkylenoxiden umfassend mindestens zwei unterschiedliche Polyalkylenoxide.

Bevorzugte Polyaklylenoxid-Gruppen, insbesondere umfassend Polyalkylenoxid-Gruppen, aufweisende Verbindungen können vorzugsweise ein Molekulargewicht von 200 g/mol bis 35.000 g/mol, bevorzugt 200 bis 1500 g/mol aufweisen. Dabei ist es weiter bevorzugt, wenn das mittlere Molekulargewicht von 200 g/mol bis 1500 g/mol beträgt.

Ein erfindungsgemäßes Anodenmaterial kann vorteilhaft mit einem Film oder einer Beschichtung umfassend Polyalkylenoxid bereitgestellt werden.

Erfindungsgemäß besonders bevorzugt weist das Anodenmaterial, insbesondere ein Silizium als Metall-enthaltendes Anodenmaterial, bevorzugt Anodenmaterial von Siliziumpartikeln, einen Gehalt an Eisen, Zink, Kalium, Aluminium, Kohlenstoff, Calcium, optional Titan, optional Sauerstoff, optional Kupfer von jeweils größer gleich 0,01 mg/kg auf, besonders bevorzugt ist ein Gehalt an Eisen von größer gleich 0,02 mg/kg. Ferner ist Gegenstand der Erfindung ein Anodenmaterial umfassend Siliziumpartikel und optional Kohlenstoff und Silizium-enthaltende Partikel und optional Partikel mindestens einer allotropen Kohlenstoffmodifikation, wobei die Siliziumpartikel, insbesondere die Silizium-Anode, einen Gehalt an Eisen von größer gleich 0,02 mg/kg aufweist. Als Kohlenstoff- und Silizium-enthaltende Partikel und mindestens eine allotrope Kohlenstoffmodifikation aufweisende Partikel können umfasst sein Carbon-Black, kugelförmige Nanopartikel umfassend Graphit, Graphit, Graphen und polycyclischen Kohlenstoff. Diese Partikel weisen vorzugsweise einen Durchmesser von größer gleich 1 nm, insbesondere von 10 nm bis 300 nm auf. Vorzugsweise umfassen die Kohlenstoff und Silizium-enthaltenden Partikel Siliciumcarbid und/oder die Partikel mindestens eine allotrope Kohlenstoffmodifikation umfassend Diamant, polycyclische Kohlenstoffmodifikationen, Graphit, Fulleren, Graphen. Diamant kann aus einem Recyclingprozess mittels Drahtsägen stammen. Entsprechend können auch Zink, Kalium, Aluminium oder Eisen als Anodenmaterial entsprechende Partikel aufweisen, die einen Gehalt an Silizium, Kohlenstoff, Calcium, optional Titan, optional Sauerstoff, optional Kupfer von jeweils größer gleich 0,01 mg/kg aufweisen können.

Ein besonders bevorzugtes alternatives oder zusätzliches Metall-enthaltendes Anodenmaterial kann Siridion^{®}-Black umfassen. Nach einer Alternative kann das Anodenmaterial umfassen Silizium-enthaltende Partikel mit einem Gehalt an Kohlenstoff, insbesondere mit einem Gehalt von 1 bis kleiner 10 Gew.-% Kohlenstoff im Gesamtgehalt der Silizium-enthaltenden Partikel. Bevorzugte Anodenmaterialen können Gemische von Siliziumpartikeln ohne Kohlenstoffgehalt und Siliziumpartikel mit einem Kohlenstoffgehalt umfassen. Die erfindungsgemäß genannten Silizium-Partikel können auch als Mischungen umfassend definierte Fraktionen qualitativ unterschiedlich zusammengesetzter Siliziumpartikel vorliegen.

Nach einer Ausführungsform weist das Metall-enthaltende Anodenmaterial bevorzugt Siliziumpartikel und optional Kohlenstoff und Silizium-enthaltende Partikel und optional Partikel mindestens einer allotropen Kohlenstoffmodifikation auf, wobei die Siliziumpartikel jeweils unabhängig voneinander, insbesondere die Silizium-Anode, jeweils unabhängig voneinander einen Gehalt an Eisen, Zink, Aluminium, Kohlenstoff, Calcium, Kalium optional Titan, optional Sauerstoff, optional Kupfer von jeweils größer gleich 0,01 mg/kg aufweisen. Des Weiteren kann es bevorzugt sein, wenn der Gehalt in den Siliziumpartikeln, insbesondere der Silizium-Anode, beträgt:
- Eisen größer gleich 0,05 mg/kg,
- Kalium größer gleich 0,01 mg/kg,
- Aluminium größer gleich 0,01 mg/kg,
- Kohlenstoff größer gleich 0,01 mg/kg,
- Calcium größer gleich 0,01 mg/kg,
- und optional Titan größer gleich 0,001 mg/kg,
- und optional Sauerstoff größer gleich 0,001 mg/kg,
- und optional Kupfer größer gleich 0,001 mg/kg.

Gleichfalls bevorzugtes Metall-enthaltendes Anodenmaterial kann umfassen Silizium, bevorzugt Siliziumpartikel mit i) einem Gehalt an Eisen von größer gleich 0,02 mg/kg, bevorzugt größer gleich 0,05 mg/kg, und/oder ii) Silizium, bevorzugt Siliziumpartikel, mit Eisen-enthaltenden Partikeln, wobei die Eisen-enthaltenden Partikel mit einem Gehalt an Eisen von größer gleich 90 Gew.-% in Bezug auf die Gesamtzusammensetzung der Eisen-enthaltenden Partikel vorliegen, wobei die Eisen-enthaltenden Partikel vorzugsweise eine Edelstahllegierung umfassen. Die Eisen-enthaltenden Partikel mit einem Eisengehalt größer 90 % können aus einem Wafersägeprozess und der aufgearbeiteten Sägesuspension stammen oder aus einem Recyclingprozess z.B. von Solarsilizium. Ferner kann das Metall-enthaltende Anodenmaterial, insbesondere die Siliziumpartikel oder die Silizium-Anode, einen Gehalt aufweisen an:
- Eisen größer gleich 5 mg/kg,
- Aluminium größer gleich 0,5 mg/kg,
- Calcium größer gleich 5 mg/kg,
- Kalium größer gleich 5 mg/kg,
- und optional Sauerstoff größer gleich 0,01 mg/kg,
- und optional Titan größer gleich 0,01 mg/kg,
- und optional Kupfer größer gleich 0,05 mg/kg.

Die Siliziumpartikel können umfassen Primärpartikel, amorphe Siliziumpartikel, mono- oder polykristalline Siliziumpartikel. Als Primärpartikel gelten Partikel, die sich in einem thermischen Prozess der Herstellung von Siliziumpartikeln ausbilden und sich anschließend zusammenballen und dabei Aggregate und/oder Agglomerate ausbilden. Die Primärpartikel weisen dabei üblicherweise einen Durchmesser von 1 bis 1000 nm auf, während die Aggregate und/oder Agglomerate von 150 bis 20 Mikrometer in mindestens einer Dimension aufweisen können. Eine bevorzugte Partikelgrößenverteilung von amorphen Siliziumpartikeln kann von 1 nm bis 700 nm betragen, insbesondere von 10 nm bis 500 nm, und die mono- bis polykristallinen eine Partikelgrößenverteilung von 500 nm bis 20 Mikrometer, insbesondere von 700 nm bis 20 Mikrometer. Des Weiteren kann es bevorzugt sein, wenn die mono- bis polykristallinen Siliziumpartikel bimodal mit Siliziumpartikeln im Bereich von 800 nm bis 9 Mikrometer und von 13 bis 20 Mikrometer vorliegen.

Gleichfalls können die Siliziumpartikel oder auch andere Partikel mit polymerisierbaren Monomeren in einer Zusammensetzung vorliegen, die geformt und polymerisiert und optional anschließend gesintert oder pyrolysiert wird.

Entsprechend einer bevorzugten Ausführungsvariante umfasst das Silizium im Anodenmaterial, insbesondere die Siliziumpartikel, bevorzugt amorphe und/oder polykristalline Siliziumpartikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen und/oder polykristalline Silizium-Partikel, des Anodenmaterials Dotierstoffe, wobei die Dotierstoffe größer gleich 10² Atome (ca. 100 Gew.-ppm, abhängig von Atomgewicht des Dotierstoffes) der 15. Hauptgruppe auf 10⁶ Silizium-Atome und/oder größer gleich 10² Atome der 13. Hauptgruppe auf 10⁶ Silizium-Atome vorliegen.

Nach weiteren bevorzugten, alternativen Ausführungsformen umfasst das Silizium, insbesondere die amorphen und/oder polykristalline Silizium-Partikel, des Anodenmaterials Dotierstoffe, wobei die Dotierstoffe größer gleich 10³ Atome der 15. Hauptgruppe auf 10⁶ Silizium-Atome größer gleich 2*10³ Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt.

Entsprechend weiteren bevorzugten, alternativen Ausführungsformen umfasst das Silizium, insbesondere die amorphen Siliziumpartikel, des Anodenmaterials Dotierstoffe, wobei die Dotierstoffe lokal größer gleich 10⁴ Atome der 15. Hauptgruppe auf 10⁶ Silizium-Atome und/oder größer gleich 10⁴ Atome der 13. Hauptgruppe auf 10⁶ Silizium-Atome betragen.

Nach weiteren bevorzugten, alternativen Ausführungsformen umfasst das Silizium, insbesondere die amorphen und/oder polykristalline Siliziumpartikel, des Anodenmaterials Dotierstoffe, wobei die Dotierstoffe größer gleich 10¹⁹ Atome der 15. Hauptgruppe auf 5*10²² Silizium-Atome und/oder größer gleich 10¹⁹ Atome der 13. Hauptgruppe auf 5*10²² Silizium-Atome aufweisen.

Die Silizium-Partikel können auf atomarer Ebene eine Legierung von Silizium mit mindestens einem Element der 13. oder 15 Hauptgruppe aufweisen, wobei das mindestens ein Element der 13. oder 15. Hauptgruppe ganz besonders bevorzugt mit größer gleich 10²⁰ Atomen/cm³ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen. Es wurde überraschend gefunden, dass die Legierungen von Silizium und Bor antikorrosiv wirken, so dass die Lebensdauer der Primärzelle verlängert wird.

Gegenstand der Erfindung ist eine Silizium-Anode umfassend Metall-enthaltendes Anodenmaterial mit Siliziumpartikel, die einen Gehalt an Bor von 1 Gew.-ppm bis 1,8 Gew.-% aufweisen.

Des Weiteren wird ein wirtschaftliches Kathodenmaterial bereitgestellt, das vorzugsweise eine physikalische Mischung von Mangandioxid (MnO₂) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Die vorliegende Erfindung wird durch die nachfolgenden Beispiele näher erläutert, ohne den Gegenstand zu beschränken.

### Ausführungsbeispiele:

### Beispiel 1

In einem geeigneten Reaktionsgefäß werden 278 Teile 3-Glycidyloxypropyltriethoxysilan vorgelegt. Die Mischung wird 5 Stunden bei Raumtemperatur gerührt. Danach wird das durch die Hydrolyse der Ethoxygruppen entstandene Ethanol im Vakuum bei 40 °C abdestilliert, wobei die Viskosität stark anstieg. Es verbleiben 6,3 Gew.-% freies Ethanol im Produkt. Das Reaktionsprodukt wird mit 7,4 g Propionsäure versetzt und eine Stunde gerührt. Es kommt zur Hydrolyse weiterer Alkoxygruppen. Es wird ein milchig-weißes, im Durchlicht opaleszierendes, hochviskoses Produkt erhalten.

### Beispiel 2

In einem geeigneten Reaktionsgefäß werden 182 Teile 3-Glycidyloxypropyltrimethoxysilan (DYNASYLAN^{®} GLYMO) vorgelegt und nacheinander unter Rühren 9 Teile konzentrierte Essigsäure, 18 Teile Zirkon-n-propylat zugegeben. Nach Beginn der Hydrolyse der Methoxygruppen des 3-Glycidyloxypropyltrimethoxysilans steigt die Temperatur um 10 bis 15 °C. Die Reaktionsmischung wird anschließend 2 Stunden bei einer Sumpftemperatur von ca. 78 °C nachgerührt. Dann wird Methanol im Vakuum bei 53 bis 61 °C abdestilliert. Mit Beginn der Destillation werden 156 Teile VE-Wasser zugesetzt. Nach Beendigung der destillativen Abtrennung von Methanol werden nochmals 70 Teile VE-Wasser zugesetzt, um anteilig destillativ abgetrenntes VE-Wasser zu ersetzen und den Feststoffgehalt auf rund 45 bzw. 50 Gew.-% einzustellen. Erhalten wird ein milchig-weißes, im Durchlicht opaleszierendes, niederviskoses, lagerstabiles Produkt.

### Beispiel 3

0,8 mol GLYEO (3-Glycidyloxypropyltriethoxysilan) werden mit 0,1 n Salzsäure versetzt und 16 Stunden bei Raumtemperatur gerührt. Anschließend wird Ethanol abdestilliert.

Die Beschichtungseigenschaft der Reaktionsprodukte der Beispiele 1 und 2 wird geprüft. Dazu werden die Reaktionsprodukte auf die Oberfläche eines Aluminium-Prüfblechs der Firma Pausch der Legierung Alu 3105H24 verwendet. Eine Vorreinigung erfolgte mittels Ethylacetat und Mikrofasertuch. Das Beschichtungssystem wird mittels 6-Mikrometer-Rakel appliziert (12 Tage nach Herstellung der Reaktionsprodukte, Umgebungsbedingungen: 24 °C, 45 bis 65 % relative Feuchte). Anschließend wird getrocknet: 10 Minuten bei Raumtemperatur (24 °C), nachfolgend 10 Minuten bei 200 °C. Die Beschichtung wird einen Tag nach Herstellung untersucht.

Die entsprechend beschichtete Aluminiumplatte wird 2 h im Kochtest behandelt. Anschließend wird ein Gitterschnitt nach Tesa-Abriss/DIN EN ISO 2409 durchgeführt. Bei beiden Beispielen wird Gt 0 - ohne visuelle Veränderung festgestellt.

### Ausführungsbeispiel 1

Herstellung Formkörper, hier gesinterter Pressling: Masse: 1 g, Max. Druck: 180 bar, Max. Temperatur: 750 °C, Haltezeit: 180 s, in Spark-Plasma Sinterofen, Firma Fritsch. Die Presslinge wurden alle mit den gleichen Parametern gesintert.

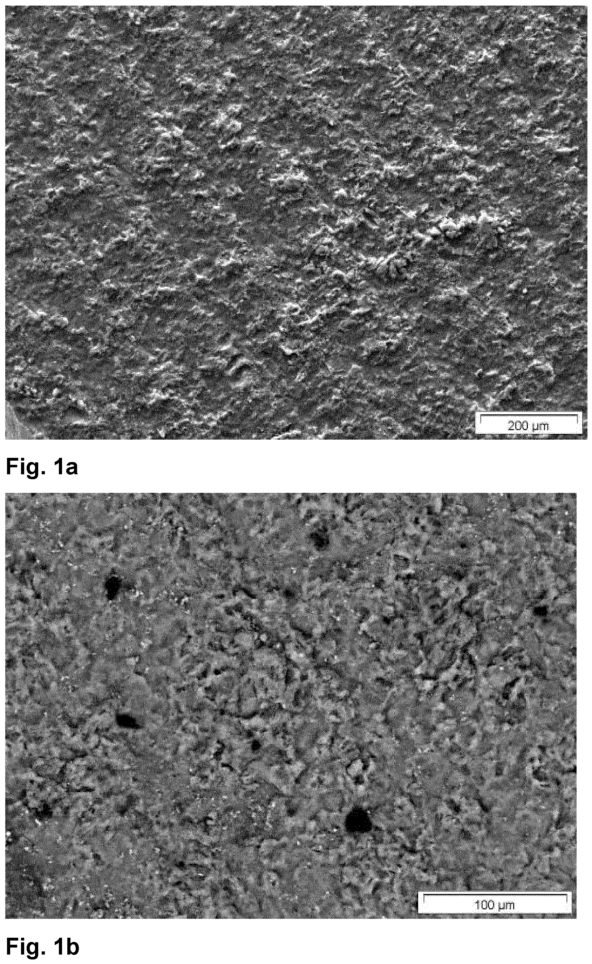

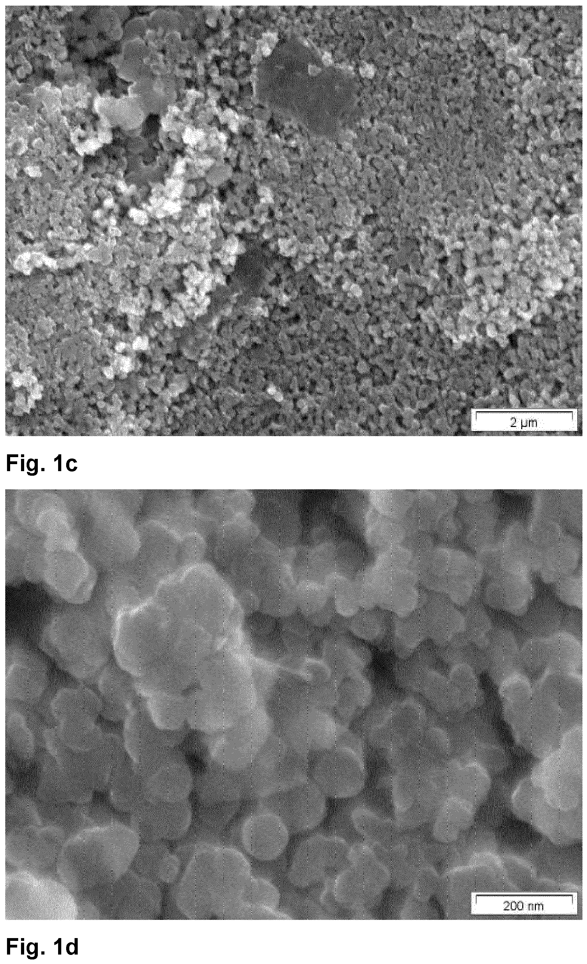

In den **Figuren 1a** und **1d** sind die an Kontaktpunkten miteinander verbunden einzelnen Siliziumpartikel, die im Nanometerbereich die äußere Oberfläche und innere Oberfläche des Formkörpers bilden, gut zu erkennen. Die Kontaktpunkte zwischen den Siliziumpartikeln werden gebildet aus dem Material der hier angeschmolzenen Siliziumpartikel. Eine Vielzahl an Siliziumpartikeln sind daher integral an den Kontaktpunkten miteinander verbunden, hier verschmolzen.

Ein Silizium-Pressling der **Figuren 1a** bis **d** wurde beschichtet, indem er in das Reaktionsprodukt des Beispiels 3 eingetaucht wurde. Anschließend konnte überschüssiges Material ablaufen. Der Pressling wurde im Wärmeofen für 2 Tage behandelt.

Ein unbehandelter Pressling wurde in eine wässrige 3 M und 5 M KOH-Lösung gelegt. Sofort beginnt die Korrosion des Siliziums. Dies ist an der Blasenbildung zu erkennen.

Ein entsprechend mit einer gemäß Beispiel 3 hergestellten Silizium-Verbindung behandelter Pressling wurde in eine wässrige 3M KOH und einer in eine 5M KOH Lösung gelegt. Die Lösung mit 3M KOH bleibt für 18 Minuten klar und beginnt erst nach etwa 27 Minuten einzutrüben. In der auf 5 M KOH eingestellten Lösung beginnt nach etwa 10 Minuten eine Trübung einzusetzen. Die Trübung deutet auf eine Korrosion des Presslings hin.

**Tabelle 1: Si-Pressling unbehandelt und behandelt mit GLYMO (3-Glycidyloxypropyltriethoxysilan), PEG 200 und Beispiel 3**

| Silizium Presslinge gesintert | | | | |
|---|---|---|---|---|
| Zeit [min] | 3 M KOH wässrig, Glymo (1 Gew.-%) | 3 M KOH wässrig, PEG200 (1 Gew.-%) | 3 M KOH wässrig, Beispiel 3 (1 Gew.-%) | 3 M KOH wässrig |
| 0 | Klar | klar | klar | Beginn Eintrübung |
| 1 | Klar | klar | klar | trüb |
| 15 | leicht trüb | trüb | klar | trüb |
| 27 | leicht trüb | trüb | leicht trüb | trüb |

## Patentansprüche

1. Metall-enthaltendes Anodenmaterial, insbesondere zur Verwendung in elektrochemischen Primärzellen mit alkalischem Elektrolyten, **dadurch gekennzeichnet, dass** das Metall-enthaltende Anodenmaterial als Metall umfasst Silizium, Kalium, Zink, Aluminium, Eisen und/oder Legierung umfassend eines oder mehrere der vorgenannten Metalle, wobei die Oberfläche des Metall-enthaltenden Anodenmaterials zumindest teilweise organofunktionelle Silizium-enthaltende Verbindungen aufweist.

2. Anodenmaterial nach Anspruch 1, **dadurch gekennzeichnet, dass** die Oberfläche aufweist Metall-Sauerstoff-Silizium-Strukturen, wobei die jeweilige Silizium-Struktur Bestandteil einer organofunktionellen Silizium-enthaltenden Verbindung ist.

3. Anodenmaterial nach Anspruch 1 oder 2, **dadurch gekennzeichnet, dass** das Metall umfasst Silizium, Calcium, Kalium, Zink, Aluminium, Eisen und/oder Legierung umfassend eines oder mehrere der vorgenannten Metalle und optional Lithium, insbesondere umfasst eine Legierung mit Silizium, Kalium, Zink, Aluminium und/oder Eisen und jeweils optional Lithium.

4. Anodenmaterial nach Anspruch 1, **dadurch gekennzeichnet, dass** die Metall-Sauerstoff-Silizium-Strukturen der Oberfläche umfassen Strukturen der Formeln I
Me-O-R (I)
R jeweils unabhängig ausgewählt ist aus organofunktionellen Silizium-enthaltenden Verbindungen.

5. Anodenmaterial nach einem der Ansprüche 1 bis 4, **dadurch gekennzeichnet, dass** die organofunktionellen Silizium-enthaltenden Verbindungen umfassend Verbindungen der allgemeinen Formeln IIa, IIa* und/oder IIb oder
mit R in Formel I umfassend Formel IIa, IIa* oder IIb
-SiY(OR¹)_{c}(OR²)_{d} (IIa)
-SiY²(OR¹)(OR²) (IIa*)
mit c gleich 1 oder 2 und d gleich 1 oder 2, wobei c + d = 2, und R¹ ausgewählt aus Methyl, Ethyl, n-Propyl, iso-Propyl, Polyether, und R² gleich Wasserstoff ist,
wobei Y umfasst 3-Gylcidyloxypropyl-, 3-Glycidyloxyethyl-, 3-Glycidyloxymethyl-, 3-(2,3-dihydroxyprop-1-oxy)propyl- 3-(2,3-dihydroxyprop-1-oxy)ethyl-, 3-(2,3-dihydroxyprop-1-oxy)methyl-, -Polyalkylenoxid-Gruppen und/oder Alkyl-Gruppen mit C1 bis C16,
-SiY(OR¹)_{c}(OR²)_{d}(O_{1/2}) (IIb)
in Siloxanoligomeren mit c gleich 0 oder 1 und d gleich 0 oder 1, wobei c + d = 1, und
R¹ ausgewählt aus Methyl, Ethyl, n-Propyl, iso-Propyl, Polyether, und R² gleich Wasserstoff ist, wobei Y umfasst 3-Gylcidyloxypropyl-, 3-Glycidyloxyethyl-,
3-Glycidyloxymethyl-, 3-(2,3-dihydroxyprop-1-oxy)propyl-, 3-(2,3-dihydroxyprop-1-oxy)ethyl- oder 3-(2,3-dihydroxyprop-1-oxy)methyl- oder-Polyalkylenoxid-Gruppen.

6. Anodenmaterial nach Anspruch 5, **dadurch gekennzeichnet, dass** Y in Formel IIa, IIa* oder IIb eine -Polyalkylenoxid-Gruppe ist, die umfasst -Alkylen-(O-Alkylen)ₑ-OH,
- Alkylen-(O-Alkylen)ₑ-COOH, -Alkylen-(O-Alkylen)ₑ-(C=O)NHR³,
- Alkylen-(O-Alkylen)ₑ-(C=O)NR³₂, mit R³ gleich Kohlenwasserstoff oder Polyalkylenoxid,
- Alkylen-(O-Alkylen)ₑ-O-Alkyl, -Alkylen-(O-Alkylen)ₑ-O-Alkenyl,
- Alkylen-(O-Alkylen)ₑ-O-(C=O)-Alkyl, -Alkylen-(O-Alkylen)ₑ-O-(C=O)-Alkenyl,
- Alkylen-(O-Alkylen)ₑ-O-(C=O)-Aromat-Alkyl jeweils unabhängig mit e größer gleich 2, insbesondere mit e = 5 bis 100.

7. Anodenmaterial nach einem der Ansprüche 1 bis 6, **dadurch gekennzeichnet, dass** das Metall-enthaltende Anodenmaterial als Metall umfasst Silizium und optional Lithium und/oder Legierung umfassend mindestens Silizium, und das Anodenmaterial als dreidimensionale Formkörper mit äußerer Oberfläche und innerer Oberfläche vorliegt, insbesondere wobei der Formkörper Siliziumpartikel umfasst, und wobei der Formkörper auf mindestens einem Teil seiner äußeren und inneren Oberfläche organofunktionelle Silizium-enthaltende Verbindungen aufweist.

8. Anodenmaterial nach einem der Ansprüche 1 bis 7, **dadurch gekennzeichnet, dass** es umfasst Siliziumpartikel und optional Kohlenstoff und Silizium-enthaltende Partikel und optional Partikel mindestens einer allotropen Kohlenstoffmodifikation, wobei die Siliziumpartikel jeweils unabhängig voneinander einen Gehalt an Eisen, Kalium, Zink, Aluminium, Kohlenstoff, Calcium, optional Titan, optional Sauerstoff, optional Kupfer von jeweils größer gleich 0,01 mg/kg aufweisen.

9. Anodenmaterial nach einem der Ansprüche 1 bis 7, **dadurch gekennzeichnet, dass** das Anodenmaterial als dreidimensionaler Formkörper in Form einer im Wesentlichen ebenen Platte vorliegt, wobei die Platte eine Vorderseite und eine der Vorderseite gegenüberliegende Rückseite aufweist, und Vorder- und Rückseite mit zwischen Vorder- und Rückseite umlaufender Seitenfläche die Platte ausbilden, wobei die Vorder-, Rück- und Seitenflächen die Oberfläche der Anode bilden, und diese Oberfläche des Metall enthaltenden Anodenmaterials zumindest teilweise organofunktionelle Silizium-enthaltende Verbindungen aufweist.

10. Elektrochemische Primärzelle mit Anode umfassend ein Anodenmaterial nach einem der Ansprüche 1 bis 9, **dadurch gekennzeichnet, dass** die Primärzelle umfasst Kathode und Separator, wobei der Separator Anode und Kathode separiert, wobei die Primärzelle eine Elektrolytlösung enthält, wobei die Kathode umfasst eine Zusammensetzung umfassend Kohlenstoffmaterial und ein sauerstoffspeicherndes Material, das Sauerstoff als eine sauerstoffhaltige Verbindung speichert.

11. Primärzelle nach Anspruch 10, **dadurch gekennzeichnet, dass** die Kathode eine Luftkathode ist.

12. Primärzelle nach Anspruch 11, **dadurch gekennzeichnet, dass**
a) die Zusammensetzung der Kathode ein Manganoxid, insbesondere Mangandioxid, als Bestandteil des Kathodenmaterials umfasst, wobei insbesondere das Kathodenmaterial als Kathode in einem hermetisch abgeschlossenen Batteriegehäuse vorliegt, oder
b) die Kathode eine Luftkathode ist und die Zusammensetzung der Kathode als Bestandteil des Kathodenmaterial ein Manganoxid, insbesondere Manganoxid und/oder Mangandioxid, Platin, Platin-Basis, Silber einzeln odergemeinsam als Katalysator umfasst.

13. Primärzelle nach einem der Ansprüche 11 bis 12, **dadurch gekennzeichnet, dass** die Elektrolytlösung eine wässrige, alkalische Elektrolytzusammensetzung umfasst mit
i) mindestens einer linearen oder verzweigten Polyalkylenoxid-Gruppen aufweisenden Silizium-Verbindung mit mindestens zwei Alkylenoxid-Gruppen in der Verbindung oder Gemische von mindestens zwei dieser Verbindungen umfasst, wobei die Alkylenoxid-Gruppen ausgewählt sind aus Methylenoxid, Ethylenoxid, Propylenoxid und Butylenoxid-Gruppen und/oder
ii) 3-Glycidyloxypropylalkoxysilan, 3-Glycidyloxyethylalkoxysilan, 3-Glycidyloxymethylalkoxysilan, 3-(2,3-dihydroxyprop-1-oxy)propylalkoxysilan, 3-(2,3-dihydroxyprop-1-oxy)ethylalkoxysilan, 3-(2,3-dihydroxyprop-1-oxy)methylalkoxysilan, mit jeweils unabhängig Alkoxy ausgewählt aus Methoxy, Ethoxy und Propropoxy, Hydrolysate der vorgenannten Silane und/oder oligomere Kondensate der vorgenannten Silane, und/oder
iii) Cyclopentylmethylether, 1,3-Dioxolan, Ethylencarbonat, 4-Hydroxymethyl-2,2-dimethyl-1,3-dioxolan, 4-Hydroxymethyl-1,3-dioxolan und/oder 4-Hydroxymethyl-1,3-dioxolan-2-on, oder Gemische mindestens zweier der Verbindungen ausgewählt aus i), ii) und iii) umfasst.

14. Verwendung von Silanen, Silanolen und/oder Siloxanoligomeren umfassend 3-Glycidyloxypropylalkoxysilan, 3-Glycidyloxyethylalkoxysilan, 3-Glycidyloxymethylalkoxysilan, 3-(2,3-dihydroxyprop-1-oxy)propylalkoxysilan, 3-(2,3-dihydroxyprop-1-oxy)ethylalkoxysilan, 3-(2,3-dihydroxyprop-1-oxy)methylalkoxysilan, mit jeweils unabhängig Alkoxy ausgewählt aus Methoxy, Ethoxy und Propropoxy, Hydrolysate der vorgenannten Silane und/oder oligomere Kondensate der vorgenannten Silane, oder Gemische von zwei der vorgenannten Verbindungen als Elektrolytbestandteil oder Additiv und/oder zur Herstellung von Metallenthaltendem Anodenmaterial, das an seiner Oberfläche zumindest teilweise organofunktionelle Silizium-enthaltende Verbindungen aufweist, die abgeleitet sind aus den vorgenannten Silanen, Silanolen und/oder Siloxanoligomeren oder Gemische mindestens zweier der vorgenannten Verbindungen in einer Elektrolytlösung, insbesondere als Korrosionsschutzmittel, Regler in einer Elektrolytlösung und/oder auf Anoden, als Passivierungsmittel in einer Elektrolytlösung und/oder auf Anoden und/oder als Stabilisator in einer Elektrolytlösung und/oder auf Anoden, bevorzugt in einer Elektrolytlösung mit einem pH-Wert größer 9, besonderes bevorzugt größer 10.
